# EUROPEAN PATENT SPECIFICATION

(11) **EP 3 545 434 B1**
(45) Date of publication and mention of the grant of the patent: **08.09.2021**
(21) Application number: 17822081.0
(22) Date of filing: 21.11.2017
(51) Int. Cl.: G05B 15/02, G06F 16/903

(54) **BUILDING MANAGEMENT SYSTEM HAVING SEMANTICS-ENABLED BUILDING SYSTEM DATA ACCESS**
GEBÄUDEVERWALTUNGSSYSTEM MIT SEMANTIK-AKTIVIERTEM GEBÄUDESYSTEMDATENZUGRIFF
SYSTÈME DE GESTION DE BÂTIMENT AVEC ACCÈS À DES DONNÉES DE SYSTÈME DE BÂTIMENT FONCTIONNANT PAR SÉMANTIQUE

(30) Priority: 23.11.2016 IN 201611039965
(43) Date of publication of application: 02.10.2019
(73) Proprietor: Carrier Corporation, Jupiter, FL 33478 (US)
(72) Inventor: SMITH, Fabrizio, 00185 Rome (IT); ALESSANDRELLI, Daniele, Dublin (IE); SOFRONIS, Christos, 00185 Rome (IT); FERRARI, Alberto, 00185 Rome (IT); HIGLEY, Jason, Pittsford New York 14534 (US); NANDA, Bhabani Sankar, Hyderabad Telangana 500081 (IN)
(74) Representative: Dehns
(86) International application number: PCT/US2017/062783
(87) International publication number: WO 2018/098151

(56) References cited:
- US-A1- 2009 177 634
- US-A1- 2012 011 126
- US-A1- 2013 218 349

## Description

### TECHNICAL FIELD

The subject matter disclosed herein relates generally to building management systems, and more particularly to a building management system that provides semantics-enabled access to building system data.

### BACKGROUND

A building management system may be used to read building system data from a building system and to write building system data to a building system. For example, in an HVAC application, a building management system may be used to read existing chiller water temperatures and to write an updated chiller water temperature set point to the chiller controller. In current building installations, each system (HVAC, security, safety, and building transportation) provides a huge number of data points, i.e., I/Os, commands and configurable parameters. However, data points provided by devices belonging to different systems can only be accessed and controlled through heterogeneous, often proprietary protocols, and/or managed by isolated building management systems. As a result, reading or writing building systems data can be burdensome, given the multitude of protocols and isolated nature of the diverse building systems.

US 2012/0011126 discloses a computer implemented system for facilitating communication between a plurality of building automation subsystems and a plurality of applications. US 2013/0218349 discloses a system for communicating common data associated with building automation objects between building automation devices across a network. US 2009/0177634 discloses data processing comprising requesting a semantic description from each manageable resource of a plurality of manageable resources.

### BRIEF DESCRIPTION

The disclosed invention is set out by the subject-matter of the appended claims.

According to an aspect of the invention there is provided a building management system comprising: a building system interface configured to access a building system; a data service module configured to access building system data in the building system through the building system interface; a knowledge base providing a model of the building system, the model including semantic descriptions of the building system data, the semantic descriptions of the building system data being arranged in an ontology; a semantic service module in communication with the knowledge base; and a user interface in communication with the semantic service module and the data service module, the user interface generating a user access request to access building system data; wherein the user access request is a read request; wherein the semantic service module accesses the knowledge base to retrieve building system data entries matching the user access request; wherein the knowledge base provides metadata identifying data sources from building system data entries matching the user access request to the user interface; wherein the user interface sends a request including the provided metadata to the data service module to retrieve values from the data sources identified by the knowledge base; and
wherein the data service module sends a request to the building system interface to retrieve the building system data in response to the metadata.

In addition to one or more of the features described above, further embodiments may include wherein the building system interface sends the requested building system data to the data service module.

In addition to one or more of the features described above, further embodiments may include wherein the data service module sends the requested building system data to the user interface.

In addition to one or more of the features described above, further embodiments may include wherein the user interface accesses the semantic service module to convert the building system data from a building system format to a semantic format.

In addition to one or more of the features described above, further embodiments may include wherein the semantic service module forwards the building system data in the semantic format to the user interface.

Technical effects of embodiments of the disclosure include reading and writing building system data using semantic descriptions of the building system data.

These and other advantages and features will become more apparent from the following description taken in conjunction with the drawings.

### BRIEF DESCRIPTION OF THE DRAWINGS

FIG. 1 depicts a building management system in an embodiment;
FIG. 2 depicts entries in the knowledge base in an embodiment;
FIG. 3 depicts components for reading building system data in an embodiment;
FIG. 4 depicts a process flow to read building system data in an embodiment; and
FIG. 5 depicts a process flow to write building system data.

### DETAILED DESCRIPTION

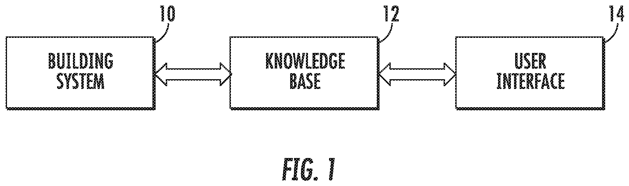

FIG. 1 is a high-level depiction of a building management system in an embodiment. A building system 10 corresponds to the physical building system(s) that are managed by the building management system. The building system 10 may include building systems across a disparate set of domains such as HVAC, building transportation, security, safety, etc. The building system 10 incorporates building system data which includes a wide variety of data types, including but not limited to, how building system elements are arranged, measurements of variables, control values for set points, etc.

A knowledge base 12 is provided to store building system data. The knowledge base 12 may be embodied on a microprocessor-based device having a memory, such as a computer server. The building system data from building system 10 is processed to form semantic descriptions of the building system data. The semantic descriptions of the building system data are stored in ontologies in knowledge base 12. In addition to variables and control values, the knowledge base 12 includes a model of the building system 10 across different domains (HVAC, building transportation, security, safety, etc.). Through the semantic descriptions and the ontology, entities (e.g., equipment, devices, zones, spaces, event sources, data sources, sensors, commands, configuration parameters) and their relationships are defined in the knowledge base 12.

A user interface 14 is used to access the knowledge base 12 in response to user queries. The user interface 14 may be implemented using an application program interface (API) accessible over a network such as a LAN, WAN, global network (e.g., Internet), etc. The user interface 14 provides an interface for reading and writing building system data.

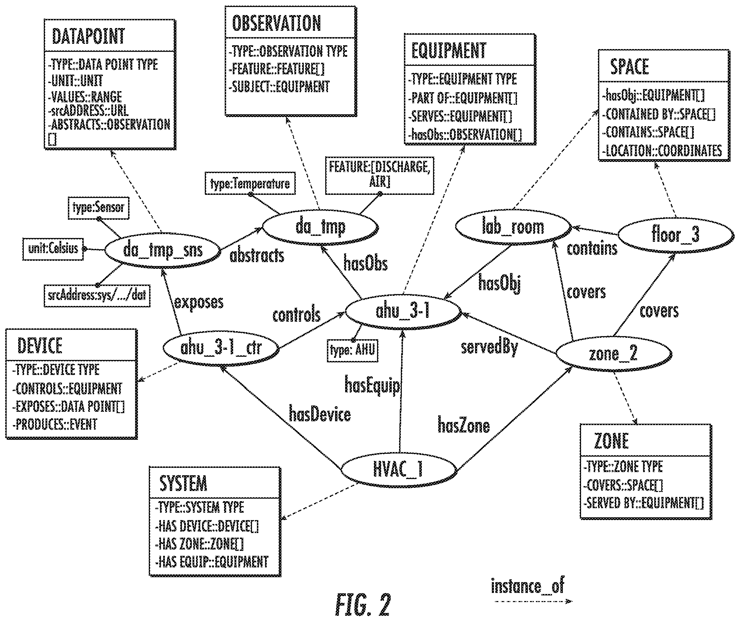

FIG. 2 illustrates example entries in the knowledge base 12. The entries correspond to semantic descriptions of building system data arranged in an ontology. Each entry in the knowledge base 12 may correspond to a variety of data types, such as a data point, property, device, equipment, etc. The semantic descriptions in knowledge base 12 include the building system data along with metadata. The relationships between the semantic descriptions of the building system data provide the model of the building system 10 by identifying how elements are organized and related. The entries in the knowledge base 12 may be identified using unique identifiers, such as RDF identifiers.

The ontology of the knowledge base 12 provides a model of the business system 10 by interrelating entries in the knowledge base 12 to provide an organization and representation of the physical business system 10. The ontology defines and models entities such as spaces (e.g., physically-delimited areas such as sites, buildings, floors, etc.), equipment (e.g., mechanical devices that compose a system (e.g., chillers, AHUs, access doors, etc.)), devices (e.g., electronic devices that provide I/O or data elaboration functionality (e.g., actuators, systems on a chip, sensor devices, etc.)) and information objects (e.g., information entities associated with devices and possibly representing inputs, outputs, configuration parameters, events, etc.). The building system model is encoded in a machine-processable ontology language, describing building entities and relationships relevant to each addressed domain (e.g., HVAC, building transportation, security, safety). The implementation of such a reference model may rely on formal/logic-based languages (e.g., OWL/RDF, description logics, datalog variants, F-logic) that enable automated inference and efficient query capabilities.

Access to the knowledge base 12 may be made through semantic query languages, such as SPARQL. An example embodiment can be based on the use of RDF as generic data model for the representation of the building systems as semantic graphs, where various entities occurring in the building systems are related to each other and mapped to the ontology according to a linked data architecture. Examples of information provided by the ontology of the knowledge base 12 include, but are not limited to, the structure of a building (floors, room, etc.); the devices installed in the building located into spaces; relationships among equipment pieces (e.g., a specific air handling unit serves a specific variable air volume box); an annotated description of I/O, commands and configurable parameters provided by each device, together with the related source system addressing information. It is understood that the ontology of the knowledge base 12 may define and model a wide variety of entities, and embodiments are not limited to the examples provided in this disclosure.

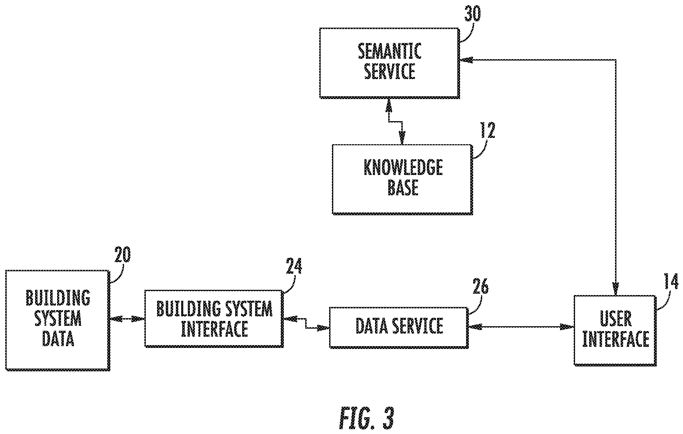

FIG. 3 depicts components for both reading and writing building system data in an embodiment. Building system data 20 is data generated by or used by the building system 10. The building system data 20 includes, but is not limited to, how components of the building system are arranged (e.g., physical layout and relationships), measurements of variables, control values for set points, etc. A building system interface 24 provides a communication interface between building system components and a data service module 26. The building system interface 24 may include a variety of interfaces to communicate with disparate building systems. For example, a first interface may communicate with an elevator system and a second interface may communicate with a security system.

A data service module 26 may be implemented by a software application executing on a microprocessor-based device having a memory, such as a computer server. The data service module 26 abstracts with a unique and universal interface a variety of systems and permits sensing/actuating a variety of devices in the building system 10. The data service module 26 uniquely addresses data points and performs read/write operations from/to the building system data 20 through an integration bus where system-specific connectors and low-level drivers may be connected.

A semantic service module 30 is used to create commands for interfacing with the knowledge base 12 in a format recognized by the knowledge base 12. The semantic service module 30 may be embodied on a microprocessor-based device having a memory, such as a computer server. In one embodiment, the semantic service module 30 may serve as a RESTful endpoint to provide GET, PUT, POST or DELETE commands in a format recognized by the knowledge base 12. The semantic service module 30 provides semantic search facilities for allowing the user interface 14 to identify the relevant data sources and to answer search queries formulated in a way that is independent from the type or domain of any individual system. The semantic service module 30 is built on top of a query engine exploiting the semantic knowledge-base 12, which provides a reconciled, integrated and linked view of building system data sources across different domains.

The user interface 14 provides an interface to both the semantic service module 30 and the data service module 26. Both read and write operations may be initiated from the user interface 14, as described in further detail herein. The user interface 14 can coordinate operations by the semantic service module 30 and the data service module 26. In some embodiments, the user interface 14 will issue one request to the semantic service module 30 and the data service module 26, which will then implement a read or write as discussed herein. In other embodiments, the user interface 14 interacts with the semantic service module 30 and the data service module 26 commanding operations in sequence.

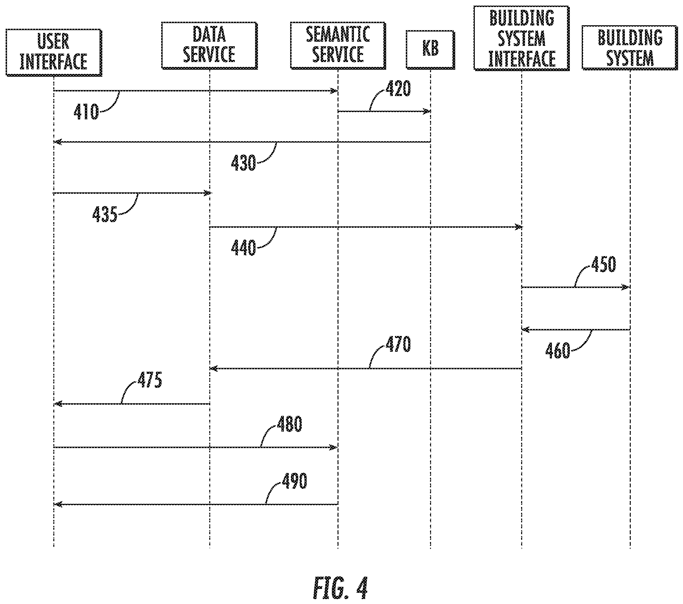

FIG. 4 depicts a process flow to read building system data in an embodiment. At 410, a user access request is issued to the semantic service module 30 by the user interface 14. In the example of FIG. 4, the user access request is a semantic search request to identify data points filtered according to properties defined in the ontology, e.g., "get the status of a chiller valve in zone 4." At 420, the semantic service module 30 accesses knowledge base 12 to retrieve building system data entries matching the user access request. The semantic service module 30 converts the user access request to a form compatible with searching knowledge base 12.

At 430, the knowledge base 12 provides metadata from building system data entries matching the user access request to the user interface 14. The metadata related to the matching data points in knowledge base 12 may include addressing information to identify the data source; characterization of the observable property manipulated by the data point (e.g., temperature, running status); related "tags" (e.g., chilled_water_leaving) ; type of data point (sensor, command, set point); communication protocol used to access the building system (e.g., analog input, binary value); capabilities and allowed values.

At 435, the user interface 14 sends a request to the data service module 26 to retrieve values from the data sources identified at 410, including the retrieved metadata. At 440, the data service module 26 then uses the metadata to access the building system interface 24 to retrieve the building system data. At 450, the building system interface 24 accesses the physical building system 10, which replies with the requested building system data at 460. At 470, the building system interface 24 sends the retrieved building system data to the data service module 26. At 475 the user interface 14 receives the building system data in a building format of the building system 10. At 480, the user interface 14 accesses the semantic service module 30 to achieve a semantically normalized representation of the data retrieved at 475, i.e., to convert the building system data from the building format of the building system 10 to a semantic format interpretable by a user. For example, the user access request may request the current status of a valve. The value returned at 470 may be a number (e.g., 1 or 0). The processing at 480 converts the building system data from the building system format to a semantic format. In this example, the semantic service module 30 determines that the building system format of "1" corresponds to semantic format of "open" (reference value defined in the ontology to be adopted for all the systems). At 490, the building system data in the semantic format is provided to the user interface 14 (i.e., the user interface indicates that the valve is open).

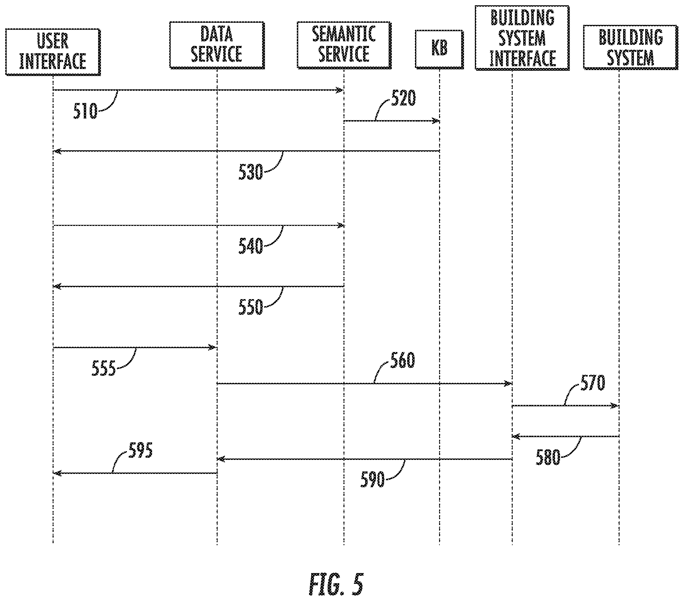

FIG. 5 depicts a process flow to write building system data. Users can write business system data (e.g., control values such as setpoints) to control operations of the building system 10. At 510, a user access request is issued to the semantic service module 30 by the user interface 14. In the example of FIG. 5, the user access request is a semantic request to write to the building system data, e.g., "close the chiller valve in zone 4." At 520, the semantic service module 30 accesses knowledge base 12 to retrieve building system data entries matching the user access request. The semantic service module 30 converts the user access request to a form compatible with searching knowledge base 12.

At 530, the knowledge base 12 provides a semantic description of building system data entries matching the user access request to the user interface 14. The semantic description includes metadata related to the matching data points in knowledge base 12. The metadata may include addressing information to identify the data source; characterization of the observable property manipulated by the data point (e.g., temperature, running status); related "tags" (e.g., chilled_water_leaving); type of data point (sensor, command, set point); communication protocol used to access the building system (e.g., analog input, binary value); capabilities and allowed values.

At 540, the user interface 14 access the semantic service module to convert the value/command the user want to push into the system to a format recognizable by the building system 10, which are returned at 550. Similar to the read operation of FIG. 4, processes 540 and 550 convert the write instruction for a semantic format (e.g., close the valve) to building system format (e.g., "0").

At 555 user interface 14 issues a request to the data service module 26 to write a particular value/command on the identified parameter/set/commendable point. At 560, the data service module 26 sends a write command to the building system interface 24 along with the building system data to be updated in the building system format. At 570, the building system interface 24 accesses the physical building system 10 to update the building system data. At 580, the building system 10 sends an acknowledgement to the building system interface 24 that the building system data has been updated. At 590, the building system interface 24 forwards the acknowledgment to the data service 26. At 595, the data service module 26 forwards the acknowledgment to the user interface 14.

Embodiments provide a number of benefits including the use of a single user interface to perform semantic searches across multiple domains (e.g., HVAC, security, transportation, etc.), in order to identify data points matching particular features. The user interface provides a unique workflow, common to all building systems to access, normalize and control heterogeneous devices' data points, therefore focusing on the actual value proposition. Embodiments leverage querying and inferences execution performance with specific semantics-based techniques.

While the disclosure has been described in detail in connection with only a limited number of embodiments, it should be readily understood that the disclosure is not limited to such disclosed embodiments. Additionally, while various embodiments of the disclosure have been described, it is to be understood that aspects of the disclosure may include only some of the described embodiments. Accordingly, the disclosure is not to be seen as limited by the foregoing description, but is only limited by the scope of the appended claims.

## Claims

1. A building management system comprising:
a building system interface configured to access a building system;
a data service module configured to access building system data in the building system through the building system interface;
a knowledge base providing a model of the building system, the model including semantic descriptions of the building system data, the semantic descriptions of the building system data being arranged in an ontology;
a semantic service module in communication with the knowledge base; and
a user interface in communication with the semantic service module and the data service module, the user interface generating a user access request to access building system data;
**characterised in that** the user access request is a read request;
and wherein the semantic service module is configured to access the knowledge base to retrieve building system data entries matching the user access request;
wherein the knowledge base is configured to provide metadata from building system data entries matching the user access request to the user interface, said metadata identifying data sources;
wherein the user interface is configured to send a request including the provided metadata to the data service module to retrieve values from the data sources identified by the knowledge base; and
wherein the data service module is configured to send a request to the building system interface to retrieve the building system data in response to the metadata.

2. The building management system of claim 1, wherein the building system interface is configured to send the requested building system data to the data service module.

3. The building management system of claim 2, wherein the data service module is configured to send the requested building system data to the user interface.

4. The building management system of claim 3, wherein the user interface is configured to access the semantic service module to convert the building system data from a building system format to a semantic format.

5. The building management system of claim 4, wherein the semantic service module is configured to forward the building system data in the semantic format to the user interface.

## Patentansprüche

1. Gebäudeverwaltungssystem, umfassend:
eine Gebäudesystemschnittstelle, die konfiguriert ist, auf ein Gebäudesystem zuzugreifen;
ein Datenservicemodul, das konfiguriert ist, auf Gebäudesystemdaten in dem Gebäudesystem über die Gebäudesystemschnittstelle zuzugreifen;
eine Wissensbasis, die ein Model des Gebäudesystems bereitstellt, wobei das Modell semantische Beschreibungen der Gebäudesystemdaten beinhaltet, wobei die semantischen Beschreibungen der Gebäudesystemdaten in einer Ontologie angeordnet sind;
ein semantisches Servicemodul in Kommunikation mit der Wissensbasis; und
eine Benutzerschnittstelle in Kommunikation mit dem semantischen Servicemodul und dem Datenservicemodul, wobei die Benutzerschnittstelle eine Benutzerzugriffsanfrage erstellt, um auf Gebäudesystemdaten zuzugreifen;
**dadurch gekennzeichnet, dass** die Benutzerzugriffsanfrage eine Leseanfrage ist;
und wobei das semantische Servicemodul konfiguriert ist, auf die Wissensbasis zuzugreifen, um Gebäudesystemdateneinträge abzurufen, die mit der Benutzerzugriffsanfrage übereinstimmen;
wobei die Wissensbasis konfiguriert ist, Metadaten aus Gebäudesystemdateneinträgen, die mit der Benutzerzugriffsanfrage übereinstimmen, an der Benutzerschnittstelle bereitzustellen, wobei die Metadaten Datenquellen identifizieren;
wobei die Benutzerschnittstelle konfiguriert ist, eine Anfrage, die die bereitgestellten Metadaten beinhaltet, an das Datenservicemodul zu senden, um Werte aus den Datenquellen, die durch die Wissensbasis identifiziert wurden, abzurufen; und
wobei das Datenservicemodul konfiguriert ist, eine Anfrage an die Gebäudesystemschnittstelle zu senden, um die Gebäudesystemdaten in Antwort auf die Metadaten abzurufen.

2. Gebäudeverwaltungssystem nach Anspruch 1, wobei die Gebäudesystemschnittstelle konfiguriert ist, die angefragten Gebäudesystemdaten an das Datenservicemodul zu senden.

3. Gebäudeverwaltungssystem nach Anspruch 2, wobei das Datenservicemodul konfiguriert ist, die angefragten Gebäudesystemdaten an die Benutzerschnittstelle zu senden.

4. Gebäudeverwaltungssystem nach Anspruch 3, wobei die Benutzerschnittstelle konfiguriert ist, auf das semantische Servicemodul zuzugreifen, um die Gebäudesystemdaten von einem Gebäudesystemformat in ein semantisches Format umzuwandeln.

5. Gebäudeverwaltungssystem nach Anspruch 4, wobei das semantische Servicemodul konfiguriert ist, die Gebäudesystemdaten in dem semantischen Format an die Benutzerschnittstelle weiterzuleiten.

## Revendications

1. Système de gestion de bâtiment comprenant :
une interface de système de bâtiment configurée pour accéder à un système de bâtiment;
un module de service de données configuré pour accéder à des données de système de bâtiment dans le système de bâtiment par le biais de l'interface de système de bâtiment ;
une base de connaissances fournissant un modèle du système de bâtiment, le modèle incluant des descriptions sémantiques des données de système de bâtiment, les descriptions sémantiques des données de système de bâtiment étant agencées dans une ontologie ;
un module de service sémantique en communication avec la base de connaissances ; et
une interface utilisateur en communication avec le module de service sémantique et le module de service de données, l'interface utilisateur générant une demande d'accès d'utilisateur pour accéder à des données de système de bâtiment ;
**caractérisé en ce que** la demande d'accès d'utilisateur est une demande de lecture ;
et dans lequel le module de service sémantique est configuré pour accéder à la base de connaissances pour récupérer des entrées de données de système de bâtiment correspondant à la demande d'accès d'utilisateur ;
dans lequel la base de connaissances est configurée pour fournir des métadonnées à partir des entrées de données de système de bâtiment correspondant à la demande d'accès d'utilisateur à l'interface utilisateur, lesdites métadonnées identifiant des sources de données ;
dans lequel l'interface utilisateur est configurée pour envoyer une demande incluant les métadonnées fournies au module de service de données pour récupérer des valeurs à partir des sources de données identifiées par la base de connaissances ; et
dans lequel le module de service de données est configuré pour envoyer une demande à l'interface de système de bâtiment pour récupérer les données de système de bâtiment en réponse aux métadonnées.

2. Système de gestion de bâtiment selon la revendication 1, dans lequel l'interface de système de bâtiment est configurée pour envoyer les données de système de bâtiment demandées au module de service de données.

3. Système de gestion de bâtiment selon la revendication 2, dans lequel le module de service de données est configuré pour envoyer les données de système de bâtiment demandées à l'interface utilisateur.

4. Système de gestion de bâtiment selon la revendication 3, dans lequel l'interface utilisateur est configurée pour accéder au module de service sémantique pour convertir les données de système de bâtiment d'un format de système de bâtiment à un format sémantique.

5. Système de gestion de bâtiment selon la revendication 4, dans lequel le module de service sémantique est configuré pour transférer les données de système de bâtiment dans le format sémantique à l'interface utilisateur.
